# EUROPEAN PATENT SPECIFICATION

(11) **EP 3 141 465 B1**
(45) Date of publication and mention of the grant of the patent: **05.09.2018**
(21) Application number: 16185813.9
(22) Date of filing: 26.08.2016
(51) Int. Cl.: B62J 17/00, B62J 17/02

(54) **MOTORCYCLE FAIRING**
MOTORRADVERKLEIDUNG
CARÉNAGE DE MOTOCYCLE

(30) Priority: 08.09.2015 JP 2015176806
(43) Date of publication of application: 15.03.2017
(73) Proprietor: Honda Motor Co., Ltd., Tokyo 107-8556 (JP)
(72) Inventor: FUTAMATA, Takeshi, SAITAMA, 351-0193 (JP); MIYAZAKI, Hiroyuki, SAITAMA, 351-0193 (JP); OKADA, Naoki, SAITAMA, 351-0193 (JP)
(74) Representative: Fioravanti, Corrado

(56) References cited:
- EP-A2- 0 985 598
- WO-A1-2015/071934
- JP-A- H04 201 792
- JP-A- H05 170 157
- JP-A- H11 342 883
- US-A- 4 198 093
- Del Breingan: "The Kawasaki ZX-12R", Wikipedia , 5 July 2004 (2004-07-05), XP002766195, Retrieved from the Internet: URL:https://web.archive.org/web/2014092520 3816/http://en.wikipedia.org/wiki/File:Kaw asaki_Ninja_ZX-12R.jpg [retrieved on 2017-01-20]

## Description

The present invention relates to a saddle riding type vehicle.
A known saddle riding type vehicle includes a cowl, disposed on a vehicle body, for receiving an airflow to thereby obtain a downforce (see, for example, Japanese Patent Laid-Open No. 2002-302081). The technique disclosed in said prior document uses a rear cowl and a rear fender in a rear portion of the vehicle body to generate a downforce.
A saddle riding type of vehicle according to the preamble of claim 1 is known from the publication by Del Breingan "The Kawasaki ZX-12R", XP002766195, Wikipedia. Another saddle riding type of vehicle is disclosed in JP H11 342883 A.
In saddle riding type vehicles, a need exists for obtaining a downforce using a simple structure.
The present invention has been made in view of the foregoing situation and it is an object of the present invention to obtain a downforce using a simple structure in a saddle riding type vehicle.
To achieve the foregoing object, an aspect of the present invention provides a saddle riding type vehicle that includes a cowl (42) that laterally covers a vehicle body. In the saddle riding type vehicle, the cowl (42) has an inclined surface (58) that is inclined so as to be disposed on a more inner side in a vehicle width direction toward an inferior direction. The cowl (42) further includes a protrusion (60) disposed at a lower portion of the cowl (42). The protrusion (60) protrudes in a horizontal direction and is continuous in an anterior-posterior direction. The saddle riding type vehicle further comprises an under cowl (43) that covers the vehicle body from below, wherein the cowl (42) is a middle cowl (42) disposed superior to the under cowl (43), the under cowl (43) has a cut-out (79) at a portion thereof covering part of the middle cowl (42), and the protrusion (60) is disposed in the cut-out (79). In accordance with the aspect of the present invention, the cowl that laterally covers the vehicle body has the inclined surface that is inclined so as to be disposed on a more inner side in the vehicle width direction toward the inferior direction, and further includes the protrusion disposed at a lower portion of the cowl. The protrusion protrudes in the horizontal direction and is continuous in the anterior-posterior direction. This arrangement allows a downforce to be obtained from air that blows against the protrusion provided continuously in the anterior-posterior direction to protrude in the horizontal direction from the lower portion of the cowl, so that a downforce can be obtained using a simple structure including the protrusion. Additionally, the protrusion is disposed at the lower portion of the inclined surface of the cowl, in which the inclined surface is inclined so as to be disposed on a more inner side in the vehicle width direction toward the inferior direction. Thus, a downforce can be obtained, while the protrusion is formed compactly in the vehicle width direction.
In the aspect of the present invention, the protrusion (60) is disposed posterior to a front wheel (2) and anterior to a pivot shaft (20) of a swing arm (12) that supports a rear wheel (3).
In accordance with the aspect of the present invention, the protrusion is disposed posterior to the front wheel and anterior to the pivot shaft of the swing arm that supports the rear wheel. Thus, the downforce can be obtained, while an airflow at a site posterior to the front wheel at which the airflow tends to be disturbed is smoothed. Additionally, the downforce can be generated at a position posterior to the front wheel and anterior to the pivot shaft and the downforce can be obtained at a front portion side of the vehicle.
In the aspect of the present invention, the protrusion (60) is disposed inferior to an axle (2a) of the front wheel (2) and superior to a pivotal axis (27a) of a side stand (27).
In accordance with the aspect of the present invention, the protrusion is disposed inferior to the axle of the front wheel and superior to the pivotal axis of the side stand. A downforce can thus be effectively obtained by the protrusion disposed at the lower portion of the vehicle body.

In accordance with the aspect of the present invention, the under cowl has the cut-out at a portion thereof covering part of the middle cowl and the protrusion is disposed in the cut-out. This arrangement allows the protrusion to protrude from the middle cowl disposed on the inside of the under cowl through the cut-out. The arrangement thus allows a protruding amount of the protrusion from the middle cowl to be large, while limiting the protruding amount of the protrusion in the vehicle width direction from the under cowl. As a result, a sufficient downforce can be obtained, while a size in the vehicle width direction is limited.

In the aspect of the present invention, the under cowl (43) is disposed so as to cover at least part of a crankcase (31) of an engine (10).

In accordance with the aspect of the present invention, the under cowl is disposed so as to cover at least part of the crankcase of the engine. This arrangement allows the cut-out to be provided in the under cowl that is large enough to cover the crankcase, offering a high degree of freedom in disposing the cut-out and enabling the protrusion to be disposed at a position at which the downforce can be effectively obtained.

In the aspect of the present invention, the protrusion (60) is formed such that outward protruding amounts (HI, H2, H3) in the vehicle width direction are smaller at positions toward a rear.

In accordance with the aspect of the present invention, the protrusion is formed such that the outward protruding amounts in the vehicle width direction are smaller at positions toward the rear. Thus, a balance can be achieved between the generated downforce and resistance by the airflow. The air can thus be made to flow smoothly to the rear, while a downforce is being obtained.

In the aspect of the present invention, the middle cowl (42) and the under cowl (43) form a subassembly, and the subassembly is fixed to the vehicle body at least at portions of the middle cowl (42) and the under cowl (43).

In accordance with the aspect of the present invention, the subassembly formed of the middle cowl and the under cowl is fixed to the vehicle at least at the portions of the middle cowl and the under cowl. This arrangement enables the middle cowl and the under cowl to be fixed to the vehicle body through a single step involving the fixing of the subassembly and the middle cowl and the under cowl to be firmly fixed to the vehicle body side.

In the saddle riding type vehicle according to the aspect of the present invention, a downforce can be obtained through a simple structure including the protrusion. Additionally, the downforce can be obtained, while the protrusion is formed compactly in the vehicle width direction.

The downforce can be obtained on the front portion side of the vehicle, while the airflow at the site posterior to the front wheel at which the airflow tends to be disturbed is smoothed.

The downforce can also be obtained effectively by the protrusion disposed at the lower portion of the vehicle body.

The protruding amount of the protrusion from the middle cowl can be made large, while the protruding amount of the protrusion in the vehicle width direction from the under cowl is limited.

Additionally, the protrusion can be disposed at a position at which the degree of freedom in disposing the cut-out can be made high and the downforce is obtained effectively.

The airflow can be made to flow smoothly to the rear, while the downforce can be obtained.

The subassembly enables the middle cowl and the under cowl to be fixed to the vehicle body through a single step and to be firmly fixed to the vehicle body side.

Further features and advantages of the invention will become apparent from the following description, taken in conjunction with the accompanying drawing, wherein:
Fig. 1 is a right side elevational view showing a motorcycle according to an embodiment of the present invention;
Fig. 2 is a right side elevational view showing a middle cowl, an under cowl, and associated parts;
Fig. 3 is a right side elevational view showing a middle cowl on the right-hand side;
Fig. 4 is a right side elevational view showing an under cowl;
Fig. 5 is a cross-sectional view taken along line V-V in Fig. 2;
Fig. 6 is a cross-sectional view taken along line VI-VI in Fig. 2; and
Fig. 7 is a cross-sectional view taken along line VII-VII in Fig. 2.

A specific embodiment to which the present invention is applied will be described below with reference to the accompanying drawings. Throughout the descriptions given hereunder, expressions indicating directions including front and rear, right and left, and up and down, mean the same directions as the directions with reference to the vehicle body unless otherwise specified. Additionally, the drawings include the following arrows to indicate respective specific directions: an arrow FR indicates forward of the vehicle body, an arrow UP indicates upward of the vehicle body, and an arrow LH indicates leftward of the vehicle body.

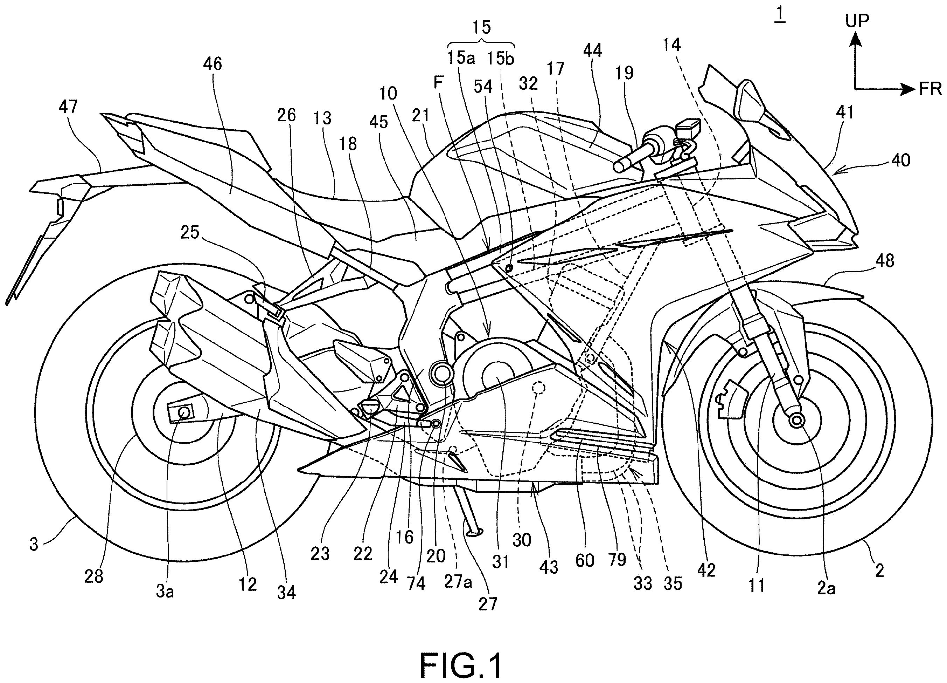

Fig. 1 is a right side elevational view showing a motorcycle according to an embodiment of the present invention. It should be noted that Fig. 1 shows only the right-hand-side part for each of those parts provided in pairs.

A motorcycle 1 includes an engine 10, a front fork 11, and a swing arm 12. Specifically, the engine 10 as a power unit is supported on a vehicle body frame F. The front fork 11 that supports a front wheel 2 is steerably supported at a front end of the vehicle body frame F. The swing arm 12 that supports a rear wheel 3 is disposed on a rear portion side of the vehicle body frame F. The motorcycle 1 further includes a seat 13 that is straddled by an occupant and disposed above the rear portion of the vehicle body frame F. The motorcycle 1 is a saddle riding type vehicle.

The vehicle body frame F includes a head pipe 14, a pair of left and right main frames 15, a pair of left and right pivot frames 16, a pair of left and right down frames 17, and a pair of left and right seat frames 18. Specifically, the head pipe 14 is disposed at a front end and supports the front fork 11. The main frames 15 extend obliquely downwardly toward the rear from the head pipe 14. The pivot frames 16 extend downwardly from rear ends of the main frames 15. The down frames 17 extend downwardly from front portions of the main frames 15. The seat frames 18 extend from upper portions of the pivot frames 16 and rear portions of the main frames 15 upwardly toward the rear up to a rear end portion of the vehicle. The main frames 15 each include an upper frame portion 15a and a lower frame portion 15b. The upper frame portion 15a connects an upper portion of the head pipe 14 with a corresponding one of the pivot frames 16. The lower frame portion 15b extends below the upper frame portion 15a.

A rider who sits in the seat 13 steers the front wheel 2 via a handlebar 19 mounted on an upper end of the front fork 11. The front wheel 2 is journaled on a front wheel axle 2a (axle) disposed at a lower end portion of the front fork 11.

The swing arm 12 has a front end portion journaled on a pivot shaft 20 that connects the left and right pivot frames 16 in a vehicle width direction and thus swings vertically about the pivot shaft 20. The swing arm 12 and the vehicle body frame F are connected with each other via a rear suspension (not shown). The rear wheel 3 is journaled on a rear wheel axle 3a that is passed through a rear end portion of the swing arm 12.

The seat 13 is supported by the seat frames 18. A fuel tank 21 is disposed above the main frames 15 so as to join a front edge of the seat 13.

A pair of left and right step holders 22 extending rearwardly is disposed behind lower portions of the left and right pivot frames 16. The rider sitting in the seat 13 rests his or her feet on a pair of left and right main steps 23. The main steps 23 are mounted on the step holders 22 and disposed posterior to the pivot frames 16. A brake pedal 24 used by the rider to operate a hydraulic brake system 28 of the rear wheel 3 is disposed anterior to the main step 23 on the right-hand side.

A passenger who sits in a rear portion of the seat 13 rests his or her feet on a pair of left and right tandem steps 25. The tandem steps 25 are supported by tandem step holders 26 that extend downwardly toward the rear from the seat frames 18.

A side stand 27 is supported by a lower portion of the pivot frame 16 on the left-hand side (one side). The side stand 27 is foldable through its rotation about a pivotal axis 27a.

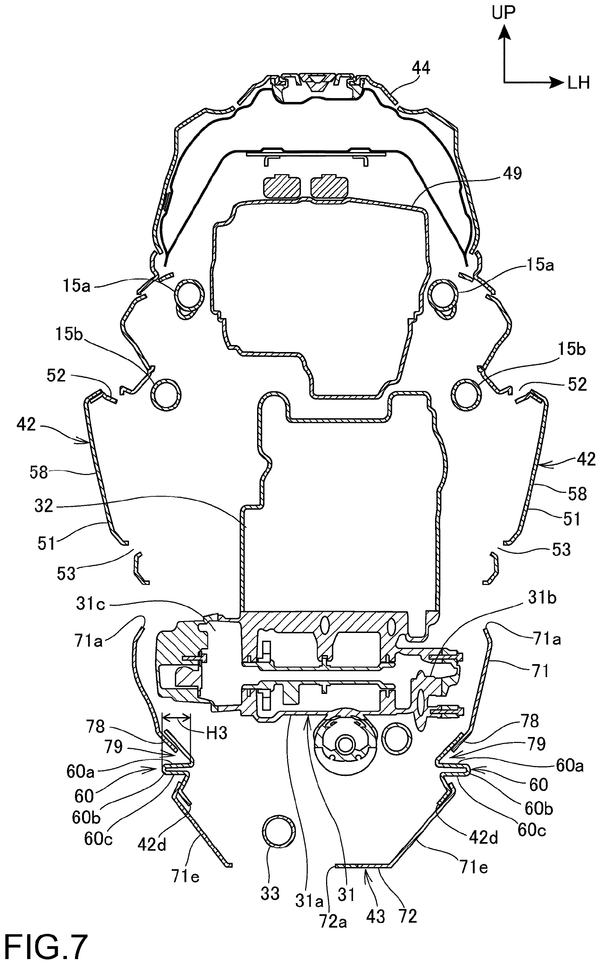

The engine 10 includes a crankcase 31 and a cylinder portion 32. Specifically, the crankcase 31 supports a crankshaft 30 that extends in the vehicle width direction. The cylinder portion 32 extends upwardly from an upper surface of a front portion of the crankcase 31. The crankcase 31, which includes, for example, a clutch chamber 31b (Fig. 7) and a generator chamber 31c (Fig. 7), in addition to a crank chamber 31a (Fig. 7), is greater in size in the vehicle width direction than the cylinder portion 32. The crank chamber 31a accommodates the crankshaft 30.

The engine 10 is supported by the vehicle body frame F so as to be hung therefrom and disposed anterior to the pivot frames 16 and below the main frames 15.

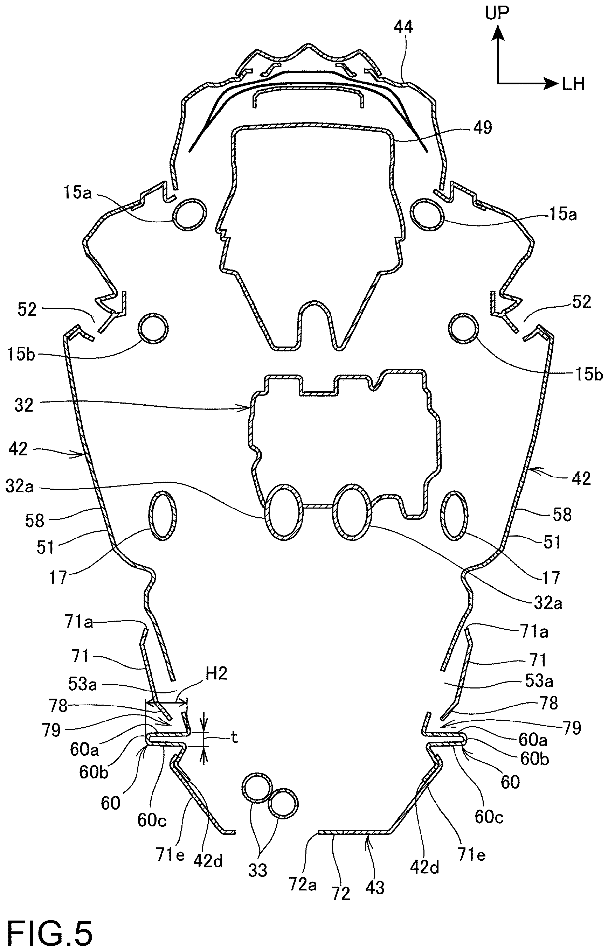

An exhaust unit 35 is connected with the engine 10. The exhaust unit 35 includes exhaust pipes 33, 33 and a muffler 34. The exhaust pipes 33, 33 are withdrawn from exhaust ports 32a, 32a (Fig. 5) disposed in a front surface of the cylinder portion 32 and extend rearwardly along a path beneath the crankcase 31. The muffler 34 is disposed on the right-hand side (the other side) on a lateral outer side of the swing arm 12 and connected to rear end portions of the exhaust pipes 33, 33 at a position posterior to the pivot frame 16 on the right-hand side.

The motorcycle 1 includes a vehicle body cover 40 that covers a vehicle body including, for example, the vehicle body frame F and the engine 10. The vehicle body cover 40 includes a front cowl 41, a pair of left and right middle cowls 42 (cowls), and an under cowl 43. Specifically, the front cowl 41 is disposed anterior to the head pipe 14. The middle cowls 42 extend rearwardly, continuously from the front cowl 41. The under cowl 43 extends rearwardly, continuously from lower portions of the middle cowls 42.

The vehicle body cover 40 further includes a tank cover 44, a pair of left and right seat under cowls 45, and a rear cowl 46. Specifically, the tank cover 44 covers the fuel tank 21. The seat under cowls 45 extend rearwardly, continuously from upper portions of the middle cowls 42. The rear cowl 46 covers the seat frames 18.

A rear fender 47 that covers the rear wheel 3 from above extends downwardly toward the rear so as to be continuous from a lower surface of the rear cowl 46. A front fender 48 that covers the front wheel 2 from above is supported by the front fork 11.

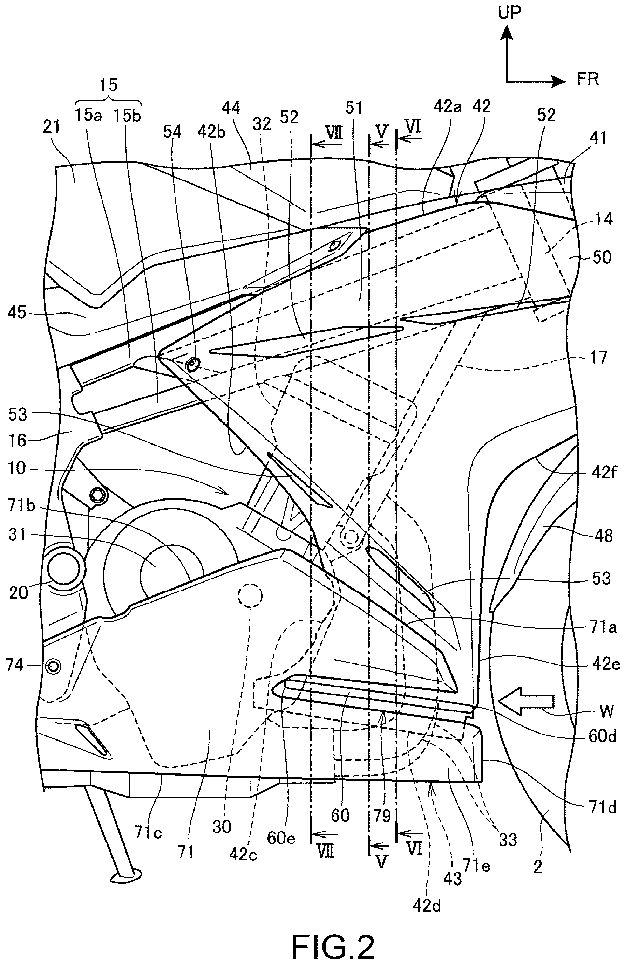

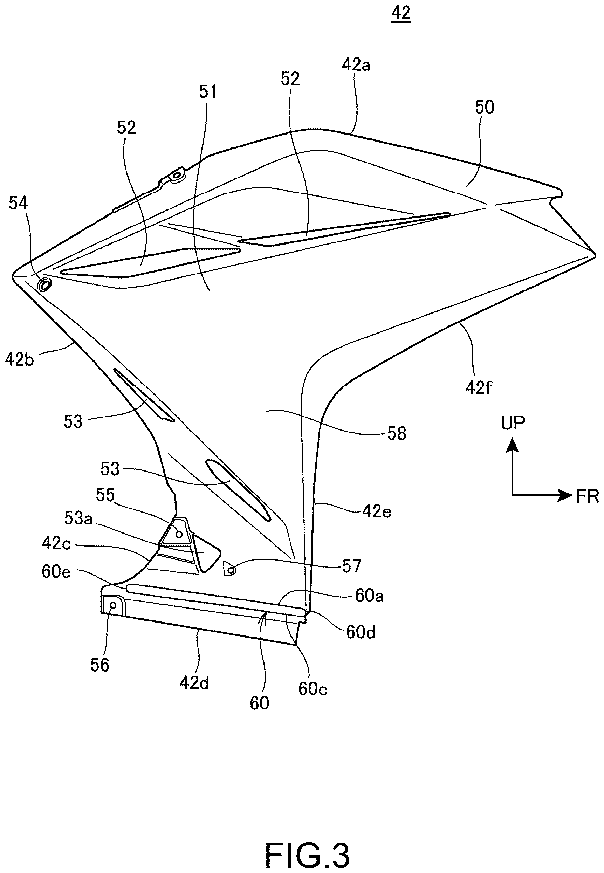

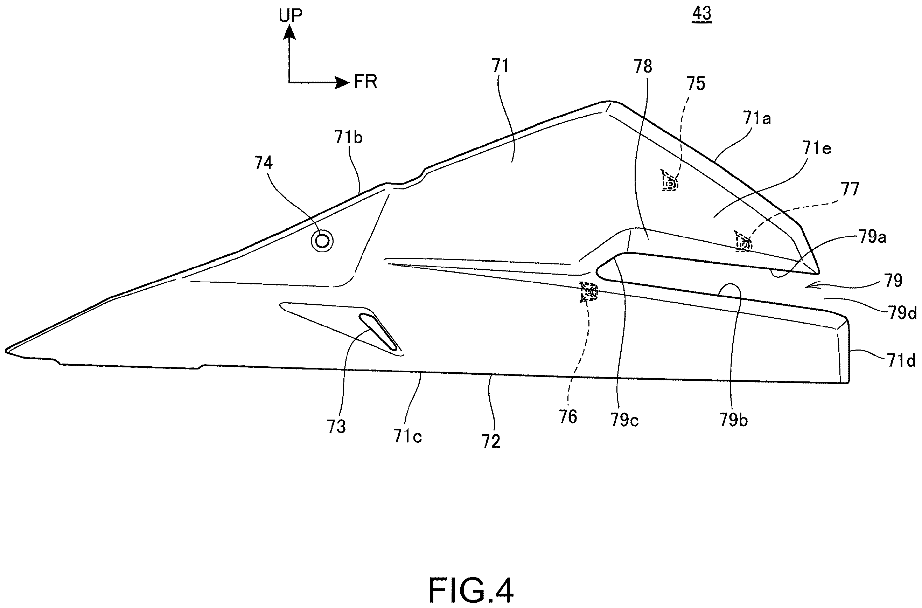

Fig. 2 is a right side elevational view showing the middle cowl 42, the under cowl 43, and associated parts. Fig. 3 is a right side elevational view showing the middle cowl 42 on the right-hand side. Fig. 4 is a right side elevational view showing the under cowl 43. Fig. 5 is a cross-sectional view taken along line V-V in Fig. 2. It should be noted that the middle cowls 42 are bilaterally symmetric and detailed descriptions for the middle cowl 42 on the left-hand side will be omitted.

Reference is made to Figs. 1 to 5. The middle cowl 42 includes a middle cowl front portion 50 and a middle cowl rear portion 51. Specifically, the middle cowl front portion 50 extends downwardly continuously from a lower edge of the front cowl 41 to thereby laterally cover the head pipe 14 and an upper portion of the front fork 11. The middle cowl rear portion 51 extends vertically below the tank cover 44 to thereby laterally cover the main frames 15, the cylinder portion 32, and the exhaust pipes 33, 33. The middle cowl 42 is a cover formed of a resin that integrates the middle cowl front portion 50 with the middle cowl rear portion 51.

The middle cowl 42 includes an upper edge portion 42a, an upper side rear edge portion 42b, a lower side rear edge portion 42c, a lower edge portion 42d, a lower side front edge portion 42e, and an upper side front edge portion 42f. Specifically, the upper edge portion 42a extends in an anterior-posterior direction along a lower edge of the front cowl 41 and the upper frame portion 15a. The upper side rear edge portion 42b extends downwardly toward the front from a rear end of the upper edge portion 42a. The lower side rear edge portion 42c extends downwardly toward the rear from a lower end of the upper side rear edge portion 42b. The lower edge portion 42d extends slightly downwardly toward the front from a lower end of the lower side rear edge portion 42c. The lower side front edge portion 42e extends straightly upwardly from a front end of the lower edge portion 42d.

The upper side front edge portion 42f extends upwardly toward the front from an upper end of the lower side front edge portion 42e to thereby join a front end of the upper edge portion 42a.

The lower side rear edge portion 42c is disposed anterior to the crankcase 31. The lower side front edge portion 42e is disposed posterior to a rear end of the front wheel 2 and anterior to the exhaust pipes 33, 33. The lower edge portion 42d overlaps lower end portions of the exhaust pipes 33, 33 in a side view.

Specifically, the middle cowl rear portion 51 has a lower portion disposed so as to cover a space between the front wheel 2 and the crankcase 31 to thereby laterally cover front end portions of the exhaust pipes 33, 33.

The middle cowl 42 has slit-shaped vent ports 52, 52 formed in an upper portion thereof. The vent ports 52, 52 extend in the anterior-posterior direction along the lower frame portion 15b. The middle cowl 42 further has vent ports 53, 53 and a vent port 53a formed therein. Specifically, the vent ports 53, 53 are arrayed side-by-side at a front side in the middle cowl 42 so as to extend along the upper side rear edge portion 42b. The vent port 53a is disposed below the front vent port 53.

The middle cowl 42 includes a fixing portion 54 disposed at a rear end portion of an upper portion thereof. The fixing portion 54 is fixed to the main frames 15. The middle cowl 42 includes another fixing portion to be fixed to the vehicle body. This specification does not, however, describe the other fixing portion.

The middle cowl 42 further includes connections 55 and 56 to be connected to the under cowl 43. The connection 55 is disposed at an upper end portion of the lower side rear edge portion 42c. The connection 56 is disposed at a rear end portion of the lower edge portion 42d. Additionally, the middle cowl 42 includes a connection 57 that is to be connected to the under cowl 43. The connection 57 is disposed at a position anterior to and below the connection 55. The connections 55, 56 and 57 are each a hole in which a fastener fits.

Reference is made to Fig. 5. The middle cowl 42 has an inclined surface 58 that is inclined so as to be disposed on a more inner side in the vehicle width direction toward an inferior direction. The inclined surface 58 is formed to be continuous, in a side view, from a position near the lower frame portion 15b to the lower edge portion 42d of the middle cowl rear portion 51. The inclined surface 58 has a side adjacent to the lower edge portion 42d disposed on the most inner side in the vehicle width direction. Specifically, the left and right middle cowls 42 have a size in the vehicle width direction, larger on an upper portion and smaller toward an inferior end.

It should be noted that, as shown in Fig. 5, an air cleaner case 49 is disposed superior to the cylinder portion 32 and inside the tank cover 44.

The middle cowl 42 includes a sheet-shaped protrusion 60 at a lower portion of the middle cowl rear portion 51. The protrusion 60 protrudes horizontally to the outside in the vehicle width direction. Specifically, the protrusion 60 extends horizontally to the outside in the vehicle width direction from a lower portion of the inclined surface 58.

The protrusion 60 is formed so as to, in a side view, extend linearly and continuously in the anterior-posterior direction. The protrusion 60 extends from a front end to a rear end of the lower portion of the middle cowl rear portion 51 in a position of being slightly upward toward the rear.

As shown in Fig. 5, the protrusion 60 is formed such that a sheet material that constitutes the middle cowl 42 is partially folded back outwardly in the vehicle width direction. The protrusion 60 is hollow inside. More specifically, the protrusion 60 includes an upper surface portion 60a, a side surface portion 60b, and a lower surface portion 60c. The upper surface portion 60a extends outwardly in the vehicle width direction such that the sheet material of the middle cowl 42 is folded back. The side surface portion 60b extends from an outer end of the upper surface portion 60a downward. The lower surface portion 60c extends from a lower end of the side surface portion 60b toward the inner side in the vehicle width direction.

Reference is made to Figs. 1 to 5. The under cowl 43 includes a pair of left and right side surface covering portions 71 and a lower surface covering portion 72. The side surface covering portions 71 laterally cover a lower portion of the vehicle body. The lower surface covering portion 72 covers the lower portion of the vehicle body from below. The side surface covering portions 71 are formed to be bilaterally symmetric and extend upwardly from respective left and right side edges of the lower surface covering portion 72. The under cowl 43 is a resin cover that integrates the side surface covering portions 71 with the lower surface covering portion 72. The side surface covering portions 71 are bilaterally symmetric and detailed descriptions for the side surface covering portion 71 on the left-hand side will be omitted.

The lower surface covering portion 72 extends substantially horizontally and continuously from a position near a rear end of the front wheel 2 to a position near a front end of the rear wheel 3. The lower surface covering portion 72 thereby covers the exhaust pipes 33, 33 and the crankcase 31 from below. The lower surface covering portion 72 has a lower surface opening 72a (Fig. 5) through which part of the exhaust pipes 33, 33 is exposed downwardly.

The side surface covering portion 71 of the under cowl 43 includes a front side upper edge portion 71a, a rear side upper edge portion 71b, a lower edge portion 71c, and a front edge portion 71d. Specifically, the front side upper edge portion 71a extends from the position near the rear end of the front wheel 2 upwardly toward the rear to an upper surface side of the crankcase 31. The rear side upper edge portion 71b extends from a rear end of the front side upper edge portion 71a downwardly toward the rear to a position near rear ends of the exhaust pipes 33, 33. The lower edge portion 71c extends from a rear end of the rear side upper edge portion 71b toward the front along the lower surface covering portion 72. The front edge portion 71d extends upwardly from a front end of the lower edge portion 71c and joins a front end of the front side upper edge portion 71a.

The side surface covering portion 71 is disposed to overlap the middle cowl 42 such that a front portion 71e thereof covers a lower portion of the middle cowl rear portion 51 from the outside. The front edge portion 71d of the side surface covering portion 71 is connected to the lower side front edge portion 42e of the middle cowl 42. Specifically, the front portions 71e of the side surface covering portions 71 are disposed so as to cover a space between the front wheel 2 and the crankcase 31 and laterally cover front end portions of the exhaust pipes 33, 33.

Rear portions of the side surface covering portions 71 laterally cover the crankcase 31, the exhaust pipes 33, 33, and the lower end portions of the pivot frames 16. The under cowl 43 is a large-sized cowl that covers from a lower surface of the crankcase 31 to an upper portion of the crankcase 31, and from front end portions to rear end portions of the exhaust pipes 33, 33.

It should be noted that the under cowl 43 is required only to cover at least part of the crankcase 31 as in the present embodiment; nonetheless, the under cowl 43 may cover generally the crankcase 31.

The side surface covering portions 71 have vent ports 73 disposed at positions corresponding to the rear portions of the exhaust pipes 33, 33. Additionally, the side surface covering portions 71 include fixing portions 74 disposed at the rear portions thereof. The fixing portions 74 are fixed to the lower end portions of the pivot frames 16.

The side surface covering portion 71 includes at the front portion 71e thereof connections 75, 76 and 77 to be connected to the connections 55, 56 and 57, respectively, of the middle cowl 42.

As shown in Fig. 5, the side surface covering portion 71 is inclined so as to extend along the inclined surface 58 of the middle cowl 42. The side surface covering portion 71 is thus disposed at positions on the more inner side in the vehicle width direction toward the inferior direction.

The front portion 71e of the side surface covering portion 71 has a recess 78 disposed at a middle portion in the vertical direction. The recess 78 represents a sheet material constituting the side surface covering portion 71, recessed inwardly in the vehicle width direction.

A slit-shaped cut-out 79 extending in the anterior-posterior direction is formed in a bottom portion of the recess 78.

The cut-out 79 includes an upper edge 79a, a lower edge 79b, a rear edge 79c, and an open portion 79d. The upper edge 79a extends in the anterior-posterior direction slightly upwardly toward the rear. The lower edge 79b extends below, and in parallel with, the upper edge 79a. The rear edge 79c connects rear ends of the upper edge 79a and the lower edge 79b vertically. The open portion 79d opens forwardly so as to cut out the front edge portion 71d. The cut-out 79 extends from the front edge portion 71d to a position near the front surface of the crankcase 31.

To mount the middle cowls 42 and the under cowl 43 on the vehicle body, the following steps are performed. Specifically, the connections 55, 56 and 57 are connected to the connections 75, 76 and 77, respectively, to thereby form a subassembly that integrates the left and right middle cowls 42 with the under cowl 43. Thereafter, the subassembly is placed over the vehicle body. While a catch (not shown) at a front portion of the subassembly is hooked onto the vehicle body side, the fixing portions 54 of the middle cowls 42 are fixed to the main frames 15 with fasteners and the fixing portions 74 of the under cowl 43 are fixed to the pivot frames 16 with a fastener. The foregoing steps fix the middle cowls 42 and the under cowl 43 to the vehicle body.

When the under cowl 43 is mounted on the middle cowl 42, the protrusion 60 extends to the outside in the vehicle width direction through the cut-out 79. Specifically, the protrusion 60 is disposed inside the cut-out 79. When the under cowl 43 is mounted on the middle cowls 42, the under cowl 43 can be slid so that the protrusions 60 fit into the cut-outs 79 by way of the open portions 79d. This provides good assemblability.

The protrusion 60 is disposed in a side view such that a front end 60d is disposed posterior to the front wheel 2 at a position near the rear end of the front wheel 2 and a rear end 60e is disposed at a position near the front surface of the crankcase 31. Specifically, the protrusion 60 is disposed at the front portion of the motorcycle 1, extending continuously in a position of being slightly upward toward the rear from the position near the rear end of the front wheel 2 to the position near the front surface of the crankcase 31.

In addition, the protrusion 60 is disposed anterior to the crankshaft 30, the pivotal axis 27a of the side stand 27 (Fig. 1), and the pivot shaft 20. Furthermore, the protrusion 60 is disposed inferior to the front wheel axle 2a and superior to the pivotal axis 27a. The protrusion 60 is disposed at the lower portion of the motorcycle 1.

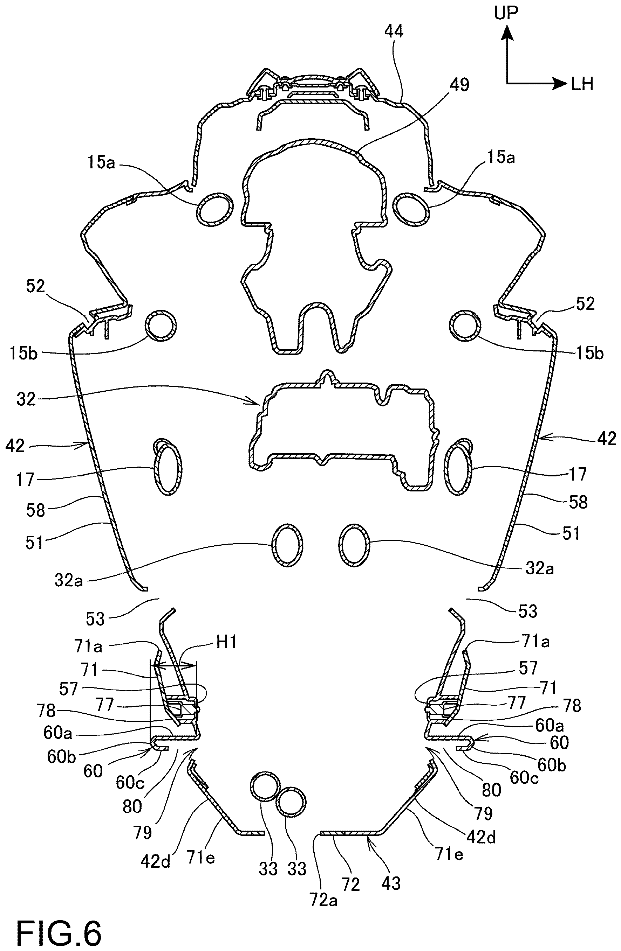

Fig. 6 is a cross-sectional view taken along line VI-VI in Fig. 2. Fig. 7 is a cross-sectional view taken along line VII-VII in Fig. 2.

Fig. 6 shows a cross section of the front portion of the protrusion 60. Fig. 5 shows a cross section posterior to the cross section shown in Fig. 6. Fig. 7 shows a cross section posterior to the cross section shown in Fig. 5.

As shown in Figs. 5 to 7, the protrusion 60 is formed so as to protrude a smaller amount from the inclined surface 58 toward the rear. The protrusion 60 protrudes a smaller amount outwardly in the vehicle width direction at positions closer to the rear. More specifically, a protruding amount H2 of the protrusion 60 shown in Fig. 5 is smaller than a protruding amount H1 of the protrusion 60 at a position anterior to the cross section shown in Fig. 5. A protruding amount H3 of the protrusion 60 shown in Fig. 7 indicating the cross section at a position posterior to the cross section shown in Fig. 5 is smaller than the protruding amount H2. Specifically, the following relation holds for the protruding amounts of the protrusion 60: protruding amount H1 > protruding amount H2 > protruding amount H3.

Additionally, as shown in Fig. 6, the protrusion 60 has a vent port 80 formed in part of the lower surface portion 60c thereof.

Reference is made to Fig. 2. Air W, as part of an airflow through areas around the protrusion 60, flows to the rear along the protrusion 60 that extends upwardly toward the rear. The flow of the air W generates a downforce that presses the upper surface portion 60a downwardly, so that gripping forces of the front wheel 2 and the rear wheel 3 can be improved. In the present embodiment, the protrusion 60 is disposed at a position posterior to the front wheel 2 and anterior to the pivot shaft 20 in the front portion of the motorcycle 1. Thus, the gripping force of the front wheel 2, in particular, can be augmented. In addition, the protrusion 60 smooths the air W at a site posterior to the front wheel 2 at which the airflow tends to be disturbed to thereby make a smooth airflow.

Additionally, the protrusion 60 is disposed at a lower portion of the inclined surface 58 that is inclined so as to be disposed on a more inner side in the vehicle width direction toward the inferior direction. Thus, the protrusion 60 can minimise an outward protruding amount thereof in the vehicle width direction. This achieves a large bank angle of the motorcycle 1.

The protrusion 60 protrudes through the cut-out 79 from the middle cowl 42 disposed on the inside of the side surface covering portion 71 of the under cowl 43. This arrangement allows the protruding amount of the protrusion 60 from the middle cowl 42 to be large to make the protrusion 60 have a large area, while limiting the protruding amount of the protrusion 60 in the vehicle width direction from the under cowl 43. As a result, a sufficient downforce can be obtained, while a size in the vehicle width direction is limited.

The cut-out 79 has a vertical height greater than a thickness t (Fig. 5) of the protrusion 60 (for example, 1.5 times or more of the thickness t). The cut-out 79 is large enough for the air W to flow into the cut-out 79 and along the protrusion 60, so that the downforce is generated. In the present embodiment, the thickness t remains constant throughout an entire length of the protrusion 60.

The cut-out 79 has the open portion 79d at the front end. The protrusion 60 can thus be brought into the cut-out 79 by way of the open portion 79d, which achieves good assemblability. Additionally, the air W flows via the open portion 79d into the cut-out 79, so that the air W can effectively blow against the protrusion 60 for a greater downforce.

The protrusion 60 is disposed anterior to the crankcase 31. The protrusion 60 can thus be disposed on the inside in the vehicle width direction without allowing the crankcase 31 to interfere with the protrusion 60. As a result, the protrusion 60 can have a large protruding amount for obtaining a sufficient downforce.

Additionally, the protrusion 60 is formed such that the protruding amounts H1, H2 and H3 from the inclined surface 58 are smaller toward the rear and the outward protruding amount in the vehicle width direction is smaller at positions toward the rear. Thus, a balance can be achieved between the downforce generated by the airflow along the protrusion 60 and resistance by the airflow. The air can thus be made to flow smoothly to the rear, while a downforce is being obtained.

As described above, in accordance with the embodiment to which the present invention is applied, the motorcycle 1 includes the middle cowls 42 that laterally cover the vehicle body. The middle cowls 42 each have the inclined surface 58 that is inclined so as to be disposed on a more inner side in the vehicle width direction toward the inferior direction. The middle cowls 42 each further includes the protrusion 60 disposed at a lower portion of the middle cowl 42. The protrusion 60 protrudes in the horizontal direction and is continuous in the anterior-posterior direction. As a result, a downforce can be obtained from the air W that blows against the protrusions 60 that protrude in the horizontal direction from the lower portions of the middle cowls 42 and are continuous in the anterior-posterior direction, so that the downforce can be obtained using a simple structure that includes the protrusions 60. Additionally, the protrusion 60 is disposed at the lower portion of the inclined surface 58, which is inclined so as to be disposed on a more inner side in the vehicle width direction toward the inferior direction, of each of the middle cowls 42. Thus, the downforce can be obtained, while the protrusion 60 is formed compactly in the vehicle width direction.

The protrusion 60 is disposed posterior to the front wheel 2 and anterior to the pivot shaft 20 of the swing arm 12 that supports the rear wheel 3. Thus, the downforce can be obtained, while the airflow at a site posterior to the front wheel 2 at which the airflow tends to be disturbed is smoothed. Additionally, the downforce can be generated at a position posterior to the front wheel 2 and anterior to the pivot shaft 20 and the downforce can be obtained at the front portion side of the motorcycle 1.

The protrusion 60 is disposed inferior to the front wheel axle 2a and superior to the pivotal axis 27a of the side stand 27. Thus, a downforce can be effectively obtained by the protrusion 60 that is disposed at the lower portion of the vehicle body. Additionally, the protrusion 60, disposed at the lower portion of the vehicle body, does not hamper operation by the rider.

Additionally, the motorcycle 1 further includes the under cowl 43 that covers the vehicle body from below. The cowls that include the protrusions 60 are the middle cowls 42 disposed superior to the under cowl 43. The under cowl 43 has the cut-out 79 at a portion thereof covering part of the middle cowls 42. The protrusion 60 is disposed in the cut-out 79. This arrangement allows the protrusion 60 to protrude from the middle cowls 42 disposed on the inside of the under cowl 43 through the cut-out 79. The arrangement thus allows the protruding amount of the protrusion 60 from the middle cowls 42 to be large, while limiting the protruding amount of the protrusion 60 in the vehicle width direction from the under cowl 43. As a result, the protrusion 60 has a large area and a sufficient downforce can be obtained, while a size in the vehicle width direction is limited.

Additionally, the under cowl 43 is disposed so as to cover at least part of the crankcase 31 of the engine 10. This arrangement allows the cut-out to be provided in the under cowl 43 that is large enough to cover the crankcase 31, offering a high degree of freedom in disposing the cut-out 79 and enabling the protrusion 60 to be disposed at a position at which the downforce can be effectively obtained.

The protrusion 60 is formed such that the outward protruding amounts H1, H2 and H3 in the vehicle width direction are smaller at positions toward the rear. Thus, a balance can be achieved between the generated downforce and resistance by the airflow. The air can thus be made to flow smoothly to the rear, while a downforce is being obtained.

Additionally, the subassembly formed of the middle cowls 42 and the under cowl 43 is fixed to the vehicle body at least at the portions of the middle cowls 42 and the under cowl 43. This arrangement enables the middle cowls 42 and the under cowl 43 to be fixed to the vehicle body through a single step involving the fixing of the subassembly, offering good assemblability. The arrangement also enables the middle cowls 42 and the under cowl 43 to be firmly fixed at their respective portions to the vehicle body side.

The foregoing description of the preferred embodiment of the present invention is intended as illustrative only, and not limiting.

For example, the embodiment has been described for a configuration in which the cut-out 79 includes the open portion 79d at the front end thereof. This is, however, not the only possible configuration. The cut-out 79 is only required to be an opening through which the protrusion 60 that is passed through the cut-out 79 can be exposed to the outside in the vehicle width direction. For example, the cut-out 79 may be a slot (opening) having no open portion 79d and extending in the anterior-posterior direction.

The embodiment has been described exemplarily for the motorcycle 1 as the saddle riding type vehicle. This is, however, illustrative only and not limiting and the present invention may be applied, for example, to a saddle riding type vehicle including three or more wheels.

### Main reference symbols:

- 1: Motorcycle (saddle riding type vehicle)
- 2: Front wheel
- 2a: Front wheel axle (axle)
- 3: Rear wheel
- 10: Engine
- 12: Swing arm
- 20: Pivot shaft
- 27: Side stand
- 27a: Pivotal axis
- 31: Crankcase
- 42: Middle cowl (cowl)
- 43: Under cowl
- 58: Inclined surface
- 60: Protrusion
- 79: Cut-out
- H1, H2, H3: Protruding amount

## Claims

1. A saddle riding type vehicle, comprising:
a cowl (42) that laterally covers a vehicle body, wherein
the cowl (42) has an inclined surface (58) that is inclined so as to be disposed on a more inner side in a vehicle width direction toward an inferior direction, and
the cowl (42) further includes a protrusion (60) disposed at a lower portion of the cowl (42), the protrusion (60) protruding in a horizontal direction and being continuous in an anterior-posterior direction;
**characterized in that** the saddle riding type vehicle further comprises:
an under cowl (43) that covers the vehicle body from below, wherein
the cowl (42) is a middle cowl (42) disposed superior to the under cowl (43),
the under cowl (43) has a cut-out (79) at a portion thereof covering part of the middle cowl (42), and
the protrusion (60) is disposed in the cut-out (79).

2. The saddle riding type vehicle according to claim 1, wherein the protrusion (60) is disposed posterior to a front wheel (2) and anterior to a pivot shaft (20) of a swing arm (12) that supports a rear wheel (3).

3. The saddle riding type vehicle according to claim 2, wherein the protrusion (60) is disposed inferior to an axle (2a) of the front wheel (2) and superior to a pivotal axis (27a) of a side stand (27).

4. The saddle riding type vehicle according to claim 1, wherein the under cowl (43) is disposed so as to cover at least part of a crankcase (31) of an engine (10).

5. The saddle riding type vehicle according to any one of claims 1 to 4, wherein the protrusion (60) is formed such that outward protruding amounts (HI, H2, H3) in the vehicle width direction are smaller at positions toward a rear.

6. The saddle riding type vehicle according to claim 3 or 4, wherein
the middle cowl (42) and the under cowl (43) form a subassembly, and
the subassembly is fixed to the vehicle body at least at portions of the middle cowl (42) and the under cowl (43).

## Patentansprüche

1. Fahrzeug vom Typ eines Sattelsitzes, aufweisend:
eine Haube (42), die einen Fahrzeugkörper seitlich abdeckt, wobei
die Haube (42) eine geneigte Fläche (58) aufweist, die geneigt ist, dass sie an einer in Fahrzeugbreitenrichtung weiter inneren Seite in Richtung einer tiefergehenden Richtung angeordnet ist, und
die Haube (42) weiter einen Vorsprung (60) aufweist, der an einem unteren Bereich der Haube (42) angeordnet ist, wobei der Vorsprung (60) in einer horizontalen Richtung vorragt und in einer Hinten-Vorne-Richtung kontinuierlich ist;
**dadurch gekennzeichnet, dass** das Fahrzeug vom Typ eines Sattelsitzes weiter aufweist:
eine untere Haube (43), die den Fahrzeugkörper von unten abdeckt, wobei
die Haube (42) eine mittlere Haube (42) ist, die oberhalb der unteren Haube (43) angeordnet ist,
die untere Haube (43) einen Ausschnitt (79) an einem Bereich davon aufweist, der die Mittelhaube (42) überdeckt, und
der Vorsprung (60) in dem Ausschnitt (79) angeordnet ist.

2. Fahrzeug vom Typ eines Sattelsitzes nach Anspruch 1, bei dem der Vorsprung (60) hinter einem Vorderrad (2) und vor einer Schwenkwelle (20) eines Pendelarms (12) angeordnet ist, der ein Hinterrad (3) trägt.

3. Fahrzeug vom Typ eines Sattelsitzes nach Anspruch 2, bei dem der Vorsprung (60) tiefer als eine Achse (2a) des Vorderrads (2) und höher als eine Schwenkachse (27a) eines Seitenständers (27) angeordnet ist.

4. Fahrzeug vom Typ eines Sattelsitzes nach Anspruch 1, bei dem die untere Haube (43) angeordnet ist, um wenigstens einen Teil eines Gehäuses (31) eines Motors (10) abzudecken.

5. Fahrzeug vom Typ eines Sattelsitzes nach einem der Ansprüche 1 bis 4, bei dem der Vorsprung (60) derart gebildet ist, dass in der Fahrzeugbreitenrichtung nach außen vorragende Maße (H1, H2, H3) an Stellen in Richtung nach hinten geringer sind.

6. Fahrzeug vom Typ eines Sattelsitzes nach Anspruch 3 oder 4, bei dem die Mittelhaube (42) und die untere Haube (43) eine Subeinheit bilden, und die Subeinheit an dem Fahrzeugkörper wenigstens an Bereichen der Mittelhaube (42) und der unteren Haube (43) befestigt ist.

## Revendications

1. Véhicule du type à selle, comprenant :
un carénage (42) qui couvre latéralement un corps du véhicule, dans lequel
le carénage (42) comporte une surface inclinée (58) qui est inclinée de façon à se trouver sur un côté plus interne dans la direction de la largeur du véhicule vers une direction inférieure, et
le carénage (42) comprend en outre une saillie (60) se trouvant au niveau d'une partie inférieure du carénage (42), la saillie (60) ressortant dans une direction horizontale et étant continue dans une direction antéro-postérieure ;
**caractérisé en ce que** le véhicule du type à selle comprend en outre :
un carénage inférieur (43) qui couvre le corps du véhicule par le dessous, dans lequel
le carénage (42) est un carénage intermédiaire (42) placé au-dessus du carénage inférieur (43),
le carénage inférieur (43) comprend une découpe (79) dans une partie de celui-ci couvrant une partie du carénage intermédiaire (42), et
la saillie (60) est placée dans la découpe (79).

2. Véhicule du type à selle selon la revendication 1, dans lequel la saillie (60) est placée de façon postérieure par rapport à une roue avant (2) et de façon antérieure par rapport à un arbre pivot (20) d'un bras oscillant (12) qui supporte une roue arrière (3).

3. Véhicule du type à selle selon la revendication 2, dans lequel la saillie (60) est placée au-dessous d'un axe (2a) de la roue avant (2) et au-dessus d'un axe de pivotement (27a) d'un support latéral (27).

4. Véhicule du type à selle selon la revendication 1, dans lequel le carénage inférieur (43) est placé de façon à couvrir au moins une partie d'un carter (31) d'un moteur (10).

5. Véhicule du type à selle selon l'une quelconque des revendications de 1 à 4, dans lequel la saillie (60) est formée de façon à ce que les parties extérieures saillantes (H1, H2, H3) dans la direction de la largeur du véhicule sont plus petites à l'arrière.

6. Véhicule du type à selle selon la revendication 3 ou 4, dans lequel le carénage intermédiaire (42) et le carénage inférieur (43) forment un sous-ensemble, et le sous-ensemble est fixé au corps du véhicule au moins à des parties du carénage intermédiaire (42) et du carénage inférieur (43).
